# EUROPÄISCHE PATENTSCHRIFT

(11) **EP 2 862 131 B1**
(45) Veröffentlichungstag und Bekanntmachung des Hinweises auf die Patenterteilung: **03.06.2020**
(21) Anmeldenummer: 13739929.1
(22) Anmeldetag: 18.06.2013
(51) Int. Cl.: G06K 19/08

(54) **VERFAHREN ZUR EINDEUTIGEN KENNZEICHNUNG EINES OBJEKTS**
METHOD FOR UNAMBIGUOUS MARKING OF AN OBJECT
PROCÉDÉ POUR LA CARACTÉRISATION UNIVOQUE D'UN OBJET

(30) Priorität: 18.06.2012 AT 502372012
(43) Veröffentlichungstag der Anmeldung: 22.04.2015
(73) Patentinhaber: Authentic Vision GmbH, 5020 Salzburg (AT)
(72) Erfinder: WEISS, Thomas, 5020 Salzburg (AT)
(74) Vertreter: Sonn & Partner Patentanwälte
(86) Internationale Anmeldenummer: PCT/AT2013/050121
(87) Internationale Veröffentlichungsnummer: WO 2013/188897

(56) Entgegenhaltungen:
- WO-A1-97/24699
- WO-A1-2008/128714
- US-A1- 2006 091 208
- US-B2- 7 353 994

## Beschreibung

Die Erfindung betrifft ein Verfahren zur eindeutigen Kennzeichnung eines Objekts, wobei einzigartige Merkmale digitalisiert und mit einem privaten Schlüssel signiert werden und die einzigartigen Merkmale selbst zusätzlich zur Signatur der digitalisierten Merkmale am Objekt oder einer Verpackung des Objekts angeordnet oder durch zumindest einen Teil des Objekts oder dessen Verpackung gebildet werden, und die Authentizität des Objekts durch Vergleich der einzigartigen Merkmale mit der mit einem öffentlichen Schlüssel entschlüsselten, am Objekt oder dessen Verpackung angeordneten Signatur der digitalisierten Merkmale festgestellt wird, wobei die einzigartigen Merkmale durch optisch mithilfe eines mit einer Kamera ausgestatteten Mobiltelefons, Tablet-PCs oder Notebooks erfassbare dreidimensionale Strukturen oder Materialien mit in Abhängigkeit des Betrachtungswinkels unterschiedlichen optischen Eigenschaften gebildet werden, und dass die digitalisierten Merkmale mit Hilfe eines Algorithmus erzeugt werden, wobei der Algorithmus auf zumindest zwei mit zumindest einer digitalen Kamera aufgenommenen digitalen Aufnahmen der einzigartigen Merkmale aus jeweils unterschiedlichen Betrachtungswinkeln angewendet wird, wobei die einzigartigen Merkmale durch zumindest einen Teil einer die dreidimensionalen Strukturen oder Materialien enthaltenden Folie gebildet werden, wobei der zumindest eine Teil der Folie willkürlich gewählt wird.

Das gegenständliche Verfahren dient dazu, möglichst einfach, beispielsweise mit einem mobilen Endgerät, ein Original von einem Plagiat, also einer vom Urheber nicht autorisierten Kopie, durch Anwendung einer digitalen Signierung leicht und einfach unterscheiden zu können. Anwendungen reichen von Arzneimittel, Datenträgern, Luxusartikeln bis hin zu Eintrittskarten.

Bekannte Verfahren wenden verschiedene Arten von Sicherheitscodes an, die zum Zweck der Verifikation mit geeigneten Lesegeräten erfasst und mit in Datenbanken gespeicherten Codes verglichen werden. Ein großer Nachteil ist dabei die Notwendigkeit eines Zugriffs zu dieser Datenbank für die Überprüfung der Authentizität des Objekts. Somit ist es nur entsprechend ausgestatteten Benutzern möglich, die Authentizität zu überprüfen.

Andere Verfahren wenden lediglich Sicherheitsmerkmale an, welche schwer kopierbar sind. Beispielhaft dafür sind Hologramme, welche üblicherweise auf Softwarepaketen von Originalherstellern angebracht sind. Zwar ist für die Überprüfung der Authentizität keine Abfrage einer externen Datenbank erforderlich, allerdings ist ein derartiges Sicherheitsmerkmale mit mehr oder weniger hohem Aufwand reproduzierbar.

Wieder andere Verfahren digitalisieren zweidimensionale visuelle Eigenschaften einzigartiger Merkmale, signieren diese mit einem privaten Schlüssel und ordnen diese Signatur am Objekt an. Um eine einfache Kopie der einzigartigen Merkmale zu verhindern, werden hierfür sehr kleine Strukturen verwendet, wodurch die Verifikation nur mit einem geeigneten Lesegerät möglich ist. Ähnliche Verfahren, welche größere und mit digitalen Kameras akquirierbare Merkmale einsetzen, benötigen eine zusätzliche haptische oder visuelle Verifikation durch den Benutzer, wodurch die vorhandene Sicherheit und Einfachheit reduziert wird. Zudem beruhen bekannte Verfahren auf einer vollkommenen Übereinstimmung der einzigartigen Merkmale, wodurch eine Verifikation bereits nach leichter Beschädigung nicht mehr möglich ist.

Die WO 2004/013735 A2 beschreibt ein Verfahren bzw. System zur eindeutigen Kennzeichnung von Objekten, wobei ein magnetischer zweidimensionaler Code angewendet wird und mit einem entsprechenden Scanner die im Code enthaltene Information ausgelesen und überprüft wird. Zwar weisen derartige magnetische Codes den Vorteil auf, dass sie nicht mit herkömmlichen Kopierern nachgeahmt werden können, allerdings sind die zur Überprüfung erforderlichen Scanner aufwändig und stehen nicht allen Benutzern bzw. Besitzern der zu schützenden Objekte zur Verfügung.

Die WO 2005/024697 A2 beschreibt ein Verfahren zur Kennzeichnung von Objekten, wobei eine digitale Signatur, welche produktspezifische Daten des zu schützenden Objekts und einzigartige Merkmale des RFID (Radio Frequency Identification)-Chips enthält, in einem RFID-Chip gespeichert wird und am zu schützenden Objekt bzw. dessen Verpackung angebracht wird. Die einzigartigen Merkmale liegen in Form eines digitalen Codes vor, welcher in den RFID-Chip eingebracht wird. Dies ist keine Eigenschaft, welche durch einen zufälligen Produktionsprozess entsteht und kann daher mit entsprechendem Wissen bzw. entsprechender Hardware repliziert werden. Wenn der RFID-Chip vom Original entfernt und auf die Verpackung eines Plagiats angebracht wird, kann nicht mehr festgestellt werden, dass es sich um kein Original handelt.

Aus der WO 1997/24699 A1 ist ein Verfahren zur eindeutigen Kennzeichnung eines Objekts bekannt, wobei die Mikro-Topographie einzigartiger Merkmale digitalisiert und mit einem privaten Schlüssel signiert wird und die Signatur am Objekt angeordnet wird. Zwar weist eine Mikro-Topographie den Vorteil auf, dass sie nicht mit herkömmlichen Kopierern nachgeahmt werden kann, allerdings sind die zur Überprüfung erforderlichen Scanner aufwändig und stehen nicht allen Benutzern bzw. Besitzern der zu schützenden Objekte zur Verfügung.

Die WO 2003/021541 A2 zeigt ein Verfahren zur eindeutigen Kennzeichnung eines Objekts, wobei visuelle Eigenschaften einzigartiger Merkmale digitalisiert und mit einem privaten Schlüssel signiert werden und die Signatur am Objekt angeordnet wird. Die hierfür verwendeten Strukturen sind wie beispielsweise die Unreinheiten eines Diamanten sehr klein. Die zur Überprüfung erforderlichen Scanner sind deshalb aufwändig und stehen nicht allen Benutzern bzw. Besitzern der zu schützenden Objekte zur Verfügung. Des Weiteren überprüft dieses Verfahren die einzigartigen Merkmale nur anhand derer zweidimensionalen Eigenschaften, wodurch diese erheblich einfacher repliziert bzw. gefälscht werden können. Zudem geht das Verfahren von einer vollkommenen Übereinstimmung der einzigartigen Merkmale aus, wodurch eine beispielsweise durch den Transport bedingte leichte Beschädigung der einzigartigen Merkmale eine Überprüfung verhindert.

Die US 2006/091208 A1 zeigt ein Verfahren zur eindeutigen Kennzeichnung eines Objekts, wobei visuelle Eigenschaften einzigartiger Merkmale digitalisiert und mit einem privaten Schlüssel signiert werden und die Signatur am Objekt angeordnet wird. Hierbei überprüft das Verfahren die einzigartigen Merkmale nur anhand derer zweidimensionalen Eigenschaften. Zwar wird die Fälschung durch eine einfache zweidimensionale Kopie durch den Einsatz von Merkmalen, welche nur Licht mit einer gewissen Wellenlänge reflektieren, erschwert, allerdings sind die zur Überprüfung erforderlichen Scanner aufwändig und stehen nicht allen Benutzern bzw. Besitzern der zu schützenden Objekte zur Verfügung.

Die US 7,353,994 zeigt ein Verfahren zur Herstellung von Sicherheitsmarkierungen, unter anderem zur Bekämpfung von Produktfälschungen. Eine Markierung kann dabei aus Ausschnitten einer Hologramm-Folie hergestellt werden. Die Ausschnitte können z.B. mit einem Kleber oder anderem Trägermaterial vermischt werden. Merkmale der Markierung können verschlüsselt mit einem nur dem Hersteller zugänglichen privaten Schlüssel als 2D-Barcode in die Markierung integriert oder in einer zentralen Datenbank gespeichert werden. Als Merkmale werden dabei die Reflexionseigenschaften der Markierung bei einer Beleuchtung unter einer ganz bestimmten Beleuchtungsgeometrie (insbesondere Einfallswinkel und Reflexionswinkel) und mit einer ganz bestimmten Wellenlänge, Phase und Amplitude verwendet. Dieses Verfahren setzt daher ein sehr genau definiertes Aufnahmeszenario voraus, dass in der Praxis nur mit einer entsprechend speziell konfigurierten Auslesevorrichtung hergestellt werden kann.

Die Aufgabe der vorliegenden Erfindung besteht in der Schaffung eines oben genannten Verfahrens zur eindeutigen Kennzeichnung von Objekten zur Feststellung der Authentizität, welches einfach und kostengünstig implementierbar ist, und das eine Überprüfung der Authentizität des Objekts mit einfachen Methoden auch durch den Besitzer des Objekts zulässt.

Gelöst wird diese Aufgabe dadurch, dass der Algorithmus geeignet ist, die digitalisierten Merkmale aus zumindest zwei mit nur einer digitalen Kamera aufgenommenen digitalen Aufnahmen der einzigartigen Merkmale zu erzeugen, wobei die digitale Kamera aus einem ersten Betrachtungswinkel eine erste digitale Aufnahme erzeugt, im Anschluss die Position der digitalen Kamera verändert wird, und die digitale Kamera aus zumindest einem zweiten Betrachtungswinkel zumindest eine zweite digitale Aufnahme erzeugt. Das vorliegende Verfahren zeichnet sich also dadurch aus, dass bestimmte einzigartige Merkmale zur Objektkennzeichnung herangezogen werden, welche möglichst schwer reproduzierbar oder kopierbar sind. Beispielweise können derartige einzigartige Merkmale mit unterschiedlichen optischen Eigenschaften in einer Folie, welche je nach Betrachtungswinkel unterschiedliche zufällige Muster aufweist, oder in einer transparenten Folie mit eingearbeiteten Teilchen, welche zufällige dreidimensionale Eigenschaften aufweisen, oder einem schwer kopierbaren serialisierten oder zufälligen Hologramm enthalten sein. Die einzigartigen Merkmale werden am Objekt bzw. an dessen Verpackung angeordnet oder durch zumindest einen Teil des Objekts oder dessen Verpackung gebildet. Zusätzlich werden visuelle Eigenschaften dieser einzigartigen Merkmale digitalisiert und mit einem privaten Schlüssel signiert und die resultierende Signatur dieser digitalisierten Merkmale zusätzlich zu den einzigartigen Merkmalen selbst am Objekt bzw. dessen Verpackung angeordnet. Die Authentizität des Objekts kann nun durch Vergleich der Merkmale selbst und der mit einem öffentlichen Schlüssel entschlüsselten Signatur der digitalisierten Merkmale ohne Abfrage einer externen Datenbank festgestellt werden. Im einfachsten Fall wird dazu eine Kamera, welche heutzutage auf nahezu jedem Mobiltelefon, Tablet-PC oder dgl. enthalten ist, verwendet. Die Herstellung der Merkmale sowie deren Digitalisierung und Signierung kann mit einfachen Methoden relativ rasch und kostengünstig vorgenommen werden, wodurch eine breite Anwendung des Verfahrens auch zur Sicherung von Massenprodukten möglich ist. Durch den Einsatz von optisch erfassbaren dreidimensionalen Strukturen oder Materialien, welche wie beispielsweise Hologramme einen dreidimensionalen Effekt aufweisen, also vom Betrachtungswinkel abhängige optische Eigenschaften besitzen, soll der eingesetzte Algorithmus den durch eine Kopie bedingten Qualitätsunterschied, welcher sich beispielsweise in fehlenden dreidimensionalen Strukturen bzw. von dem Betrachtungswinkel abhängigen optischen Eigenschaften ausdrücken, feststellen. Die in der Folie enthaltenden dreidimensionalen Strukturen oder Materialien weisen je nach Betrachtungswinkel oder Beleuchtung unterschiedliche zufällige Muster auf. Durch das Herstellen zumindest eines Teiles oder Abschnitts der Folie wird eine weitere Erhöhung der Sicherheit bewirkt. Die Folie kann beispielsweise durch ein Hologramm gebildet sein. Indem der zumindest eine Teil der Folie willkürlich gewählt wird, wird eine besondere hohe Sicherheit erzielt. Die Teile oder Abschnitte können durch Schneiden oder Ausstanzen aus der Folie hergestellt werden.

Vorteilhafterweise werden die einzigartigen Merkmale durch zufällige optisch erfassbare dreidimensionale Strukturen oder zufällig angeordnete Materialien mit in Abhängigkeit des Betrachtungswinkels unterschiedlichen optischen Eigenschaften gebildet.

Die zumindest zwei digitalen Aufnahmen können durch zumindest zwei Aufnahmen der einzigartigen Merkmale mit der zumindest einen digitalen Kamera aus jeweils unterschiedlichen Betrachtungswinkeln hergestellt sein.

Vorteilhafter Weise werden die einzigartigen Merkmale aus dem Objekt selbst oder dessen Verpackung abgeleitet. Beispielsweise kann die Struktur der Oberfläche des Objekts selbst oder der Verpackung als einzigartiges Merkmal herangezogen werden. Wichtig dabei ist, dass die einzigartigen Merkmale eine eindeutige Unterscheidung zu anderen Objekten ermöglichen. Darüber hinaus sollen die einzigartigen Merkmale nicht bzw. nur schwer kopierbar sein, um die Kennzeichnung von Plagiaten zu erschweren. Durch verschiedene Methoden kann auch erzielt werden, dass eine Kopie der einzigartigen Merkmale eindeutig vom Original unterschieden werden kann.

Die Authentizität des Objekts wird vorzugsweise durch die optische Erfassung der einzigartigen Merkmale oder zumindest eines Teils des Objekts oder dessen Verpackung mit zumindest einer digitalen Kamera jeweils aus zumindest zwei unterschiedlichen Betrachtungswinkeln und optischer Erfassung der Signatur der digitalisierten Merkmale und Verarbeitung der optischen Aufnahmen festgestellt. Dadurch wird es dem Käufer des Objekts ermöglicht, ohne Anschaffung bestimmter Vorrichtungen bzw. Abfrage bestimmter Datenbanken die Authentizität des Objekts festzustellen. Beispielsweise kann der Käufer mithilfe seines üblicherweise mit einer Kamera ausgestatteten Mobiltelefons, Tablet-PCs oder Notebooks das am Objekt bzw. dessen Verpackung angeordnete Merkmal und dessen Signatur aufnehmen und unmittelbar feststellen, ob es sich um ein Original oder Plagiat handelt. Zur Entschlüsselung der Signatur ist lediglich ein öffentlicher Schlüssel erforderlich. Sind die Eigenschaften des Merkmals und bzw. oder die Signatur menschenlesbar, können diese auch vom Benutzer ausgelesen und in das zur Verarbeitung geeignete Gerät, beispielsweise ein Mobiltelefon, eingegeben werden.

Die einzigartigen Merkmale und bzw. oder Signatur der digitalisierten Merkmale können direkt auf die Oberfläche des Objekts oder dessen Verpackung aufgebracht, beispielsweise aufgedruckt, werden. Wenn die einzigartigen Merkmale durch das Objekt selbst oder dessen Verpackung gebildet werden, muss bloß die Signatur der digitalisierten Merkmale auf die Oberfläche des Objekts oder dessen Verpackung aufgebracht werden. Zur Kennzeichnung, aus welchen Bereichen der Oberfläche des Objekts bzw. der Verpackung die einzigartigen Merkmale abgeleitet werden, kann eine entsprechende Markierung, beispielsweise in Form eines Rahmens, am Objekt bzw. der Verpackung vorgesehen sein. Diese Markierung zeigt dem Benutzer an, welchen Bereich er zur Überprüfung der Authentizität, beispielsweise mit seinem Mobiltelefon, scannen muss.

Um einen Missbrauch verhindern zu können, indem die einzigartigen Merkmale und die Signatur der digitalisierten Merkmale von einer Originalverpackung abgelöst und auf der Verpackung eines Plagiats angebracht werden, ist vorgesehen, dass die direkt auf die Oberfläche des Objekts oder dessen Verpackung aufgebrachten einzigartigen Merkmale und bzw. oder Signatur der digitalisierten Merkmale durch Manipulation durch eine Sollbruchstelle oder dgl. visuell und bzw. oder funktionell beschädigt werden. Beim Versuch der Ablösung des Merkmals bzw. der Signatur vom Objekt oder der Verpackung wird das Merkmal bzw. die Signatur durch das Einsetzen von Sollbruchstellen zerstört und somit ein Überprüfen der Authentizität des Objekts unmöglich gemacht. Bei der Speicherung der Signatur in einem RFID-Chip kann beispielsweise beim Versuch der Ablösung des RFID-Chips vom Objekt bzw. dessen Verpackung die Antenne des Transponders zerstört und somit ein Auslesen des Inhalts unmöglich gemacht werden.

Alternativ zur direkten Aufbringung der einzigartigen Merkmale und bzw. oder Signatur der digitalisierten Merkmale auf die Oberfläche des Objekts oder dessen Verpackung können diese auch auf zumindest einen Träger aufgebracht, insbesondere aufgedruckt, werden, und der zumindest eine Träger auf die Oberfläche des Objekts oder dessen Verpackung aufgebracht, insbesondere aufgeklebt, werden. Dies erleichtert die Herstellung der einzigartigen Merkmale und Signatur der digitalisierten Merkmale, welche danach auf die jeweiligen Objekte bzw. deren Verpackung aufgebracht, beispielsweise aufgeklebt, werden können. Die einzigartigen Merkmale und die Signatur können auf einem Träger oder auf geteilten Trägern angeordnet sein. Wenn die einzigartigen Merkmale durch das Objekt selbst oder dessen Verpackung gebildet werden, wird lediglich ein Träger für die Signatur der digitalisierten Merkmale benötigt.

Auch in diesem Fall ist es zur Erhöhung der Sicherheit von Vorteil, wenn zumindest ein Träger durch Manipulation, insbesondere Ablösen, durch eine Sollbruchstelle oder dgl. visuell und bzw. oder funktionell beschädigt wird. Dadurch kann verhindert werden, dass die eindeutige Kennzeichnung eines Originalprodukts auf ein Plagiat oder dessen Verpackung übertragen werden kann.

Die einzigartigen Merkmale weisen gemäß einem weiteren Merkmal der Erfindung in Abhängigkeit des Betrachtungswinkels unterschiedliche Lichtreflexionseigenschaften als optische Eigenschaften auf. Diese unterschiedlichen Lichtreflexionseigenschaften in Abhängigkeit des Betrachtungswinkels können beispielsweise durch reflektierende Partikel in einer Folie hervorgerufen werden.

Gemäß einem weiteren Merkmal der Erfindung ist vorgesehen, dass die auf das Objekt oder dessen Verpackung aufgebrachten einzigartigen Merkmale und die Signatur der digitalisierten Merkmale wenigstens ein zusätzliches Sicherheitsmerkmal aufweisen können. Ein derartiges zusätzliches Sicherheitsmerkmal kann beispielsweise durch erhabene oder vertiefte Oberflächen, Wasserzeichen, Hologramme, reflektierende Oberflächen, etc. gebildet werden, wie es auch bei Banknoten üblich ist. Durch diese Maßnahme kann eine noch höhere Fälschungssicherheit erzielt werden.

Zusätzlich können den digitalisierten Merkmalen vor dem Signieren digitalisierte Informationen des Objekts hinzugefügt werden. Derartige Informationen können beispielsweise den Namen des Objekts bzw. Produkts, Angaben über den Hersteller, das Produktionsdatum, usw. enthalten. Somit enthalten die digitalisierten Merkmale Informationen über das zu kennzeichnende Objekt, wodurch eine noch festere Beziehung zwischen der Signatur und dem Objekt hergestellt werden kann.

Darüber hinaus oder alternativ dazu können auch der Signatur der digitalisierten Merkmale digitalisierte Informationen des Objekts und bzw. oder die digitalisierten Merkmale hinzugefügt werden.

Die Signatur der digitalisierten Merkmale ist vorzugsweise in Form eines ein- oder zweidimensionalen Barcodes dargestellt. Ein derartiger Code kann besonders einfach mit üblichen Geräten, wie zum Beispiel der Kamera eines Mobiltelefons, gescannt und somit die Authentizität des Objekts leicht festgestellt werden.

Alternativ oder zusätzlich können die einzigartigen Merkmale und bzw. oder die Signatur menschenlesbar sein und vom Benutzer ausgelesen und in ein zur Verarbeitung geeignetes Gerät, vorzugsweise ein mobiles Endgerät, beispielsweise ein Mobiltelefon, eingegeben werden.

Alternativ oder zusätzlich dazu kann die Signatur der digitalisierten Merkmale auch in einem RFID-Element gespeichert werden. Der jeweilige Aufwand für die Digitalisierung und Signierung der Merkmale hängt natürlich auch vom zu kennzeichnenden Objekt und dessen Wert ab.

Wenn die Signatur der digitalisierten Merkmale und bzw. oder digitalisierte Informationen des Objekts in einer zentralen Datenbank gespeichert werden, können wichtige Informationen für nachträgliche Abfragen über das Objekt gewonnen werden. Darüber hinaus kann die Signatur durch eine eindeutige Nummer ersetzt werden, welche auf die in der zentralen Datenbank gespeicherte Signatur der digitalisierten Merkmale und bzw. oder digitalisierte Informationen des Objekts verweist.

Bei der Überprüfung der Authentizität des Objekts können Daten zur eindeutigen Identifizierung des Objekts und Daten zu dessen Lokalisierung (beispielsweise Koordinaten des Global Positioning Systems GPS) erfasst und in einer zentralen Datenbank gespeichert werden.

Die vorliegende Erfindung wird anhand der beigefügten Zeichnungen, welche Ausführungsbeispiele des Verfahrens zur eindeutigen Kennzeichnung eines Objekts wiedergeben, näher erläutert.

Darin zeigen
- Fig. 1: das Blockschaltbild eines Anwendungsfalles der Kennzeichnung eines Objekts;
- Fig. 2: ein Blockschaltbild eines Anwendungsfalles der Überprüfung der Authentizität des Objekts, welches gemäß Fig. 1 gekennzeichnet wurde;
- Fig. 3: ein weiteres Anwendungsbeispiel, bei dem die einzigartigen Merkmale durch die Verpackung des zu kennzeichnenden Objekts selbst gebildet werden;
- Fig. 4: die detaillierte Darstellung der Digitalisierung der einzigartigen Merkmale mit Hilfe von zwei Akquisition aus unterschiedlichen Betrachtungswinkeln; und
- Fig. 5: ein Blockschaltbild eines Anwendungsfalles der Überprüfung der Authentizität des Objekts, bei dem zusätzlich Daten zur eindeutigen Identifizierung des Objekts sowie dessen Lokalisierung in einer zentralen Datenbank abgespeichert werden.

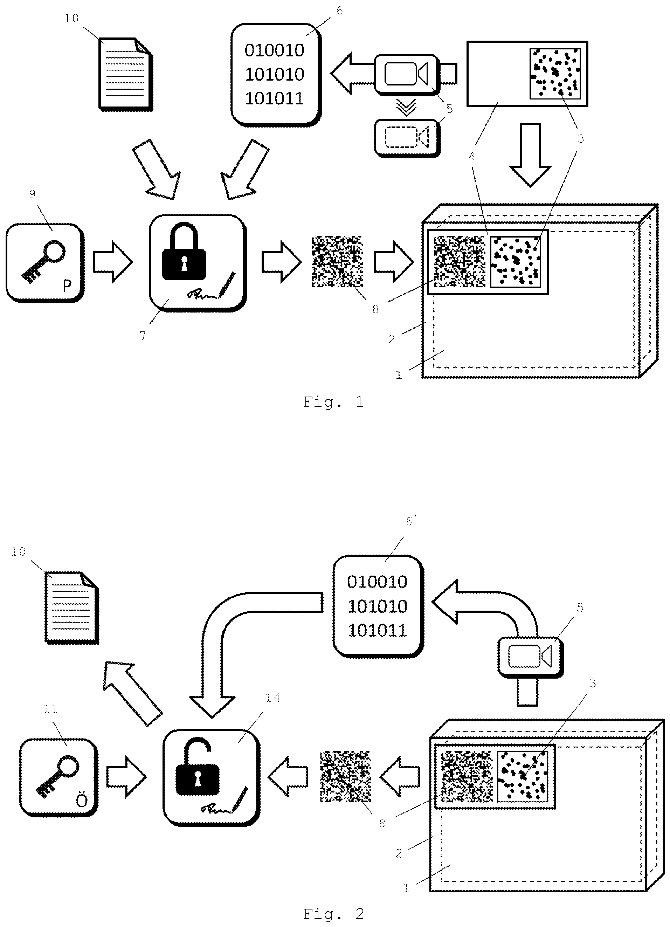

Fig. 1 zeigt ein Blockschaltbild eines Anwendungsfall der Kennzeichnung eines Objekts 1, welches in einer Verpackung 2 angeordnet ist. Erfindungsgemäß werden einzigartige Merkmale 3 an der Verpackung 2 des Objekts 1 angeordnet. Diese einzigartigen Merkmale 3 können wie in Fig. 1 skizziert beispielsweise aus zufällig angeordneten Teilchen, welche auf einen Träger 4 aufgepresst werden und je nach Betrachtungswinkel unterschiedliche optische Eigenschaften, beispielsweise Lichtreflexionseigenschaften, aufweisen, hergestellt werden. Die auf dem Träger 4 angeordneten einzigartigen Merkmale 3 werden zusätzlich digitalisiert, was mit zumindest einer digitalen Kamera 5, beispielsweise einem Mobiltelefon, erfolgen kann. Hierfür werden zumindest zwei Aufnahmen aus unterschiedlichen Betrachtungswinkeln akquiriert und mit Hilfe eines Algorithmus auf ihre einzigartigen dreidimensionalen bzw. vom Betrachtungswinkel abhängigen optischen Merkmale reduziert. Diese digitalisierten Merkmale 6 werden nun mit einem Signierverfahren 7 signiert und die Signatur 8 beispielsweise in Form eines zweidimensionalen Codes auf die Verpackung 2 direkt oder auf einen Träger 4 aufgebracht, der wiederum auf die Verpackung 2 aufgebracht, insbesondere aufgeklebt, wird. Die Signierung 8 erfolgt unter Anwendung eines privaten Schlüssels 9. Vor dem Signierverfahren 7 können den digitalisierten Merkmalen 6 noch digitalisierte Informationen 10 über das zu kennzeichnende Objekt 1, beispielsweise Produktnamen, Herstellerdaten, Produktionsdaten, etc., hinzugefügt werden. Das in Fig. 1 dargestellte Ausführungsbeispiel zeigt ein Verfahren zur eindeutigen Kennzeichnung eines Objekts 1, das selbst über keine einzigartigen Merkmale 3 verfügt, die also erzeugt und dem Objekt 1 bzw. dessen Verpackung 2 hinzugefügt werden müssen. Wenn das Objekt 1 bzw. dessen Verpackung 2 bereits über einzigartige Merkmale 3 verfügt, brauchen keine einzigartigen Merkmale 3 hinzugefügt werden, sondern es kann ein Teil des Objekts 1 selbst oder dessen Verpackung 2 dazu herangezogen werden. Beispielsweise kann die Oberflächenbeschaffenheit eines Teils des Objekts 1 bzw. dessen Verpackung 2 dazu herangezogen werden. Dabei muss lediglich der Bereich des Objekts 1 bzw. dessen Verpackung 2 definiert werden, der die einzigartigen Merkmale 3 mit den in Abhängigkeit des Betrachtungswinkels unterschiedlichen optischen Eigenschaften enthält und aus dem die Signatur 8 erzeugt wird.

Wichtig ist jedenfalls, dass sowohl die einzigartigen Merkmale 3 als auch die Signatur 8 der digitalisierten einzigartigen Merkmale 3 am Objekt 1 bzw. dessen Verpackung 2 zu dessen eindeutiger Kennzeichnung angebracht sind oder durch zumindest einen Teil des Objekts 1 oder dessen Verpackung 2 gebildet sind. Um zu verhindern, dass die Merkmale 3 sowie die Signatur 8 von einem Original auf ein Plagiat übertragen werden kann, ist es von Vorteil, wenn diese einzigartigen Merkmale 3 bzw. die Signatur 8 der digitalisierten Merkmale 6 durch eine Sollbruchstelle oder dgl. bei Manipulation visuell und bzw. oder funktionell beschädigt werden. Beim Versuch des Ablösens der Merkmale 3 oder der Signatur 8 bzw. deren Träger 4 werden diese somit zerstört und ein Überprüfen der Authentizität des Objekts 1 unmöglich gemacht.

Die einzigartigen Merkmale 3 können verschiedenartigst hergestellt werden. Beispielsweise kann einer transparenten Folie bei deren Erstellung Schwebeteilchen beigemengt werden, welche durch ihre dreidimensionale Verteilung je nach Betrachtungswinkel unterschiedliche zufällige Muster aufweisen. Auch das zufällige Aufbringen von Schnipsel einer Folie, welche je nach Betrachtungswinkel unterschiedliche Lichtreflexionseigenschaften aufweisen, kann zur Herstellung solcher einzigartiger Merkmale 3 dienen. Beispielsweise kann eine Folie aus unterschiedlich gefärbtem Granulat hergestellt werden, wodurch diese eine zufällige Struktur aufweist und einen Abschnitt dieser Folie als Träger dieser einzigartigen Merkmale 3 herangezogen werden. Auch das Aufbringen einer flüssigen Farbe auf einen saugfähigen Untergrund kann zur Herstellung solcher einzigartiger Merkmale 3 dienen. Auch können zufällig gewählte Teile oder Ausschnitte eines Holgramms zur Erstellung der einzigartigen Merkmale 3 dienen. Derartige zufällige Hologramme können beispielsweise durch eine zufällige, also nicht registrierte, Stanzung oder Prägung einer Hologrammfolie entstehen.

Als Verfahren zur Digitalisierung und Signierung können verschiedenste bekannte Methoden angewendet werden. Bei der Signierung sollen insbesondere asymmetrische Kryptosysteme bzw. Verschlüsselungen Anwendung finden.

Fig. 2 zeigt nun anhand eines Blockschaltbilds wie anhand der Kennzeichnung gemäß Fig. 1 die Authentizität des Objekts 1 überprüft werden kann. Zu diesem Zweck werden die einzigartigen Merkmale 3 beispielsweise mithilfe einer Kamera 5 von mindestens zwei Perspektiven aufgenommen und digitalisiert, wodurch die digitalisierten Merkmale 6' erhalten werden. Zusätzlich wird die am Objekt 1 bzw. dessen Verpackung 2 angeordnete Signatur 8 ausgelesen, mit einem öffentlichen Schlüssel 11 im Block 14 für Entschlüsselung und Vergleichsoperationen entschlüsselt und daraus die digitalisierten Merkmale 6 erzeugt. Diese digitalisierten Merkmale 6 werden mit den digitalisierten Merkmalen 6' verglichen und bei hinreichender Übereinstimmung die Authentizität des Objekts 1 festgestellt. Zur Überprüfung der Authentizität des Objekts 1 wird somit keine zentrale Datenbank benötigt, sondern es muss den Benutzer lediglich der öffentliche Schlüssel 11 bekannt gegeben werden, mit dem er die Entschlüsselung der Signatur 8 vornehmen kann. Zusätzlich kann die Sicherheit dadurch erhöht werden, dass die einzigartigen Merk-male 3 weitere Eigenschaften aufweisen, anhand derer die Echtheit überprüft werden kann. Insbesondere kann eine perzeptuelle Überprüfung 12 der Merkmale 3 vorgenommen werden, anhand derer festgestellt werden kann, dass es sich nicht um eine Kopie der Merkmale 3 handelt. Beispiele dafür sind bestimmte erhabene oder vertiefte Oberflächen, Wasserzeichen, Hologramme, reflektierende Oberflächen, etc.

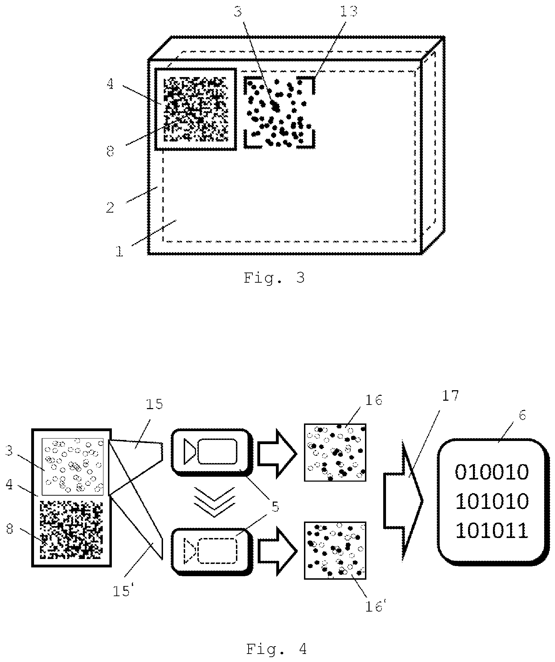

Fig. 3 zeigt ein weiteres Ausführungsbeispiel, bei dem die einzigartigen Merkmale 3 durch das Objekt 1 selbst bzw. dessen Verpackung 2 gebildet sind. In diesem Fall wird ein Bereich 13 definiert, in dem die einzigartigen Merkmale 3 enthalten sind und der zur Digitalisierung und Signierung der Merkmale 3 herangezogen wird. Die resultierende Signatur 8 wird dann beispielsweise neben diesem Bereich 13 direkt an der Oberfläche der Verpackung 2 angeordnet oder ein die Signatur 8 enthaltender Träger 4 auf die Verpackung 2 des Objekts 1 aufgebracht.

Fig. 4 zeigt das detaillierte Blockschaltbild der in Fig. 1 und Fig. 2 dargestellten Digitalisierung der einzigartigen Merkmale 3. Hierbei wird beispielsweise mithilfe einer digitalen Kamera 5 aus dem Betrachtungswinkel 15 eine digitale Aufnahme 16 der einzigartigen Merkmale 3 erzeugt. Im Anschluss wird die Position der Kamera 5 verändert und eine weitere Akquisition aus dem Betrachtungswinkel 15' durchgeführt, wodurch die digitale Aufnahme 16' erzeugt wird. Aus diesen beiden digitalen Aufnahmen 16, 16', welche sich aufgrund der dreidimensionalen Struktur oder beispielsweise der vom Betrachtungswinkel 15 abhängigen Lichtreflexionseigenschaften der Merkmale 3 unterscheiden, berechnet der Algorithmus 17 aus den gegebenen zweidimensionalen Informationen die digitalisierten dreidimensionalen bzw. vom Betrachtungswinkel 15 abhängigen Merkmale 6 bzw. 6'.

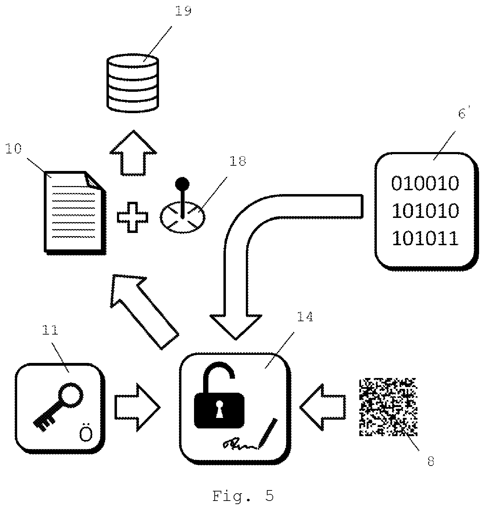

Fig. 5 zeigt schließlich ein Blockschaltbild einer Erweiterung des in Fig. 2 dargestellten Anwendungsfalls der Überprüfung der Authentizität des Objekts 1. Hierbei werden nach einer Überprüfung der Authentizität digitalisierte Informationen 10 über das zu kennzeichnende Objekt 1 gemeinsam mit Daten 18 zu dessen Lokalisierung, wie beispielsweise Koordinaten des Global Positioning Systems (GPS), in einer zentralen Datenbank 19 gespeichert. Diese Daten können interessante Informationen im Zusammenhang mit dem Objekt 1 liefern.

Das erfindungsgemäße Verfahren kann beispielsweise dazu herangezogen werden, Arzneimittel von Originalherstellern von Plagiaten zu unterscheiden und es dem Endbenutzer oder auch Zwischenhändler leicht zu ermöglichen, die Authentizität zu überprüfen. Dabei sind keine speziellen Leseeinrichtungen oder Zugänge zu Datenbanken erforderlich. Da das Verfahren die optischen dreidimensionalen Eigenschaften der einzigartigen Merkmale berücksichtig, benötigt es keine zusätzlichen Prozesse, wie beispielsweise eine perzeptuelle Überprüfung durch den Benutzer, um Kopien zu verhindern. Das Verfahren lässt sich einfach und kostengünstig implementieren.

## Patentansprüche

1. Verfahren zur eindeutigen Kennzeichnung eines Objekts (1), wobei einzigartige Merkmale (3) digitalisiert und mit einem privaten Schlüssel (9) signiert werden, und die einzigartigen Merkmale (3) selbst zusätzlich zur Signatur (8) der digitalisierten Merkmale (6) am Objekt (1) oder einer Verpackung (2) des Objekts (1) angeordnet oder durch zumindest einen Teil des Objekts (1) oder dessen Verpackung (2) gebildet werden, und die Authentizität des Objekts (1) durch Vergleich der einzigartigen Merkmale (3) mit der mit einem öffentlichen Schlüssel (11) entschlüsselten, am Objekt (1) oder dessen Verpackung (2) angeordneten Signatur (8) der digitalisierten Merkmale (6) festgestellt wird, wobei die einzigartigen Merkmale (3) durch optisch mithilfe eines mit einer Kamera ausgestatteten Mobiltelefons, Tablet-PCs oder Notebooks erfassbare dreidimensionale Strukturen oder Materialien mit in Abhängigkeit des Betrachtungswinkels (15) unterschiedlichen optischen Eigenschaften gebildet werden, und dass die digitalisierten Merkmale (6) mit Hilfe eines Algorithmus (17) erzeugt werden, wobei der Algorithmus (17) auf zumindest zwei mit zumindest einer digitalen Kamera (5) aufgenommenen digitalen Aufnahmen (16, 16') der einzigartigen Merkmale (3) aus jeweils unterschiedlichen Betrachtungswinkeln (15, 15') angewendet wird, , wobei die einzigartigen Merkmale (3) durch zumindest einen Teil einer die dreidimensionalen Strukturen oder Materialien enthaltenden Folie gebildet werden, wobei der zumindest eine Teil der Folie willkürlich gewählt wird, **dadurch gekennzeichnet, dass** der Algorithmus (17) geeignet ist, die digitalisierten Merkmale (6) aus zumindest zwei mit nur einer digitalen Kamera (5) aufgenommenen digitalen Aufnahmen (16, 16') der einzigartigen Merkmale (3) zu erzeugen, wobei die digitale Kamera (5) aus einem ersten Betrachtungswinkel (15) eine erste digitale Aufnahme (16) erzeugt, im Anschluss die Position der digitalen Kamera (5) verändert wird, und die digitale Kamera (5) aus zumindest einem zweiten Betrachtungswinkel (15') zumindest eine zweite digitale Aufnahme (16') erzeugt.

2. Verfahren nach Anspruch 1, **dadurch gekennzeichnet, dass** die einzigartigen Merkmale (3) durch zufällige optisch erfassbare dreidimensionale Strukturen oder zufällig angeordnete Materialien mit in Abhängigkeit des Betrachtungswinkels (15) unterschiedlichen optischen Eigenschaften gebildet werden.

3. Verfahren nach einem der Ansprüche 1 oder 2, **dadurch gekennzeichnet, dass** die einzigartigen Merkmale (3) aus dem Objekt (1) oder dessen Verpackung (2) abgeleitet werden.

4. Verfahren nach einem der Ansprüche 1 bis 3, **dadurch gekennzeichnet, dass** die Authentizität des Objekts (1) durch die optische Erfassung der einzigartigen Merkmale (3) oder zumindest eines Teils des Objekts (1) oder dessen Verpackung (2) mit zumindest einer digitalen Kamera (5) jeweils aus zumindest zwei unterschiedlichen Betrachtungswinkeln und optischen Erfassung der Signatur (8) der digitalisierten Merkmale (6) und Verarbeitung der optischen Aufnahmen festgestellt wird.

5. Verfahren nach einem der Ansprüche 1 bis 4, **dadurch gekennzeichnet, dass** die einzigartigen Merkmale (3) und bzw. oder die Signatur (8) der digitalisierten Merkmale (6) direkt auf die Oberfläche des Objekts (1) oder dessen Verpackung (2) aufgebracht, beispielsweise aufgedruckt, werden, wobei die direkt auf die Oberfläche des Objekts (1) oder dessen Verpackung (2) aufgebrachten einzigartigen Merkmale (3) und bzw. oder die Signatur (8) der digitalisierten Merkmale (3) vorzugsweise durch Manipulation durch eine Sollbruchstelle oder dgl. visuell und bzw. oder funktionell beschädigt werden.

6. Verfahren nach einem der Ansprüche 1 bis 4, **dadurch gekennzeichnet, dass** die einzigartigen Merkmale (3) und bzw. oder die Signatur (8) der digitalisierten Merkmale (6) auf zumindest einen Träger (4) aufgebracht, insbesondere aufgedruckt, werden, und der zumindest eine Träger (4) auf die Oberfläche des Objekts (1) oder dessen Verpackung (2) aufgebracht, insbesondere aufgeklebt wird, wobei vorzugsweise zumindest ein Träger (4) durch Manipulation, insbesondere Ablösen, durch eine Sollbruchstelle oder dgl. visuell und bzw. oder funktionell beschädigt wird.

7. Verfahren nach einem der Ansprüche 1 bis 6, **dadurch gekennzeichnet, dass** die einzigartigen Merkmale (3) eine zumindest teilweise zufällige Oberflächengeometrie, Farbgebung oder eine Kombination hiervon aufweisen und/oder in Abhängigkeit des Betrachtungswinkels (15) unterschiedliche Lichtreflexionseigenschaften als optische Eigenschaften aufweisen.

8. Verfahren nach einem der Ansprüche 1 bis 7, **dadurch gekennzeichnet, dass** die auf das Objekt (1) oder dessen Verpackung (2) aufgebrachten einzigartigen Merkmale (3) und die Signatur (8) der digitalisierten Merkmale (6) wenigstens ein zusätzliches Sicherheitsmerkmal, beispielsweise erhabene oder vertiefte Oberflächen, Wasserzeichen, Hologramme oder reflektierende Oberflächen, etc., aufweisen.

9. Verfahren nach einem der Ansprüche 1 bis 8, **dadurch gekennzeichnet, dass** den digitalisierten Merkmalen (6) vor dem Signieren digitalisierte Informationen (10) des Objekts (1) hinzugefügt werden.

10. Verfahren nach einem der Ansprüche 1 bis 9, **dadurch gekennzeichnet, dass** der Signatur (8) der digitalisierten Merkmale (6) digitalisierte Informationen (10) des Objekts (1) und bzw. oder die digitalisierten Merkmale (6) hinzugefügt werden.

11. Verfahren nach einem der Ansprüche 1 bis 10, **dadurch gekennzeichnet, dass** die Signatur (8) der digitalisierten Merkmale (6) in Form eines ein- oder zweidimensionalen Barcodes dargestellt werden und/oder in einem RFID (Radio Frequency Identification)-Element gespeichert werden.

12. Verfahren nach einem der Ansprüche 1 bis 11, **dadurch gekennzeichnet, dass** die einzigartigen Merkmale (3) und bzw. oder die Signatur (8) menschenlesbar sind und vom Benutzer ausgelesen und in ein zur Verarbeitung geeignetes Gerät eingegeben werden.

13. Verfahren nach einem der Ansprüche 1 bis 12, **dadurch gekennzeichnet, dass** die Signatur (8) der digitalisierten Merkmale (6) und bzw. oder digitalisierte Informationen (10) des Objekts (1) in einer zentralen Datenbank (19) gespeichert werden.

14. Verfahren nach einem der Ansprüche 1 bis 13, **dadurch gekennzeichnet, dass** bei der Überprüfung der Authentizität des Objekts (1) Daten zur eindeutigen Identifizierung des Objekts (1) und Daten (18) zu dessen Lokalisierung erfasst und in einer zentralen Datenbank (19) gespeichert werden.

## Claims

1. Method for uniquely identifying an object (1), unique features (3) being digitised and signed using a private key (9), and the unique features (3) themselves, in addition to the signature (8) of the digitised features (6), being arranged on the object (1) or a packaging (2) of the object (1) or being formed by at least part of the object (1) or its packaging (2), and the authenticity of the object (1) being determined by comparing the unique features (3) with the signature (8) of the digitised features (6) that is decrypted using a public key (11) and arranged on the object (1) or its packaging (2), the unique features (3) being formed by three-dimensional structures or materials which can be optically detected by means of a camera-equipped mobile phone, tablet PC or notebook and which have different optical properties depending on the viewing angle (15), and the digitised features (6) being generated by means of an algorithm (17), the algorithm (17) being used on at least two digital recordings (16, 16') of the unique features (3) that are recorded by at least one digital camera (5) from different viewing angles (15, 15'), the unique features (3) being formed by at least part of a film containing the three-dimensional structures or materials, the at least part of the film being chosen arbitrarily, **characterised in that** the algorithm (17) is suitable for generating the digitised features (6) from at least two digital recordings (16, 16') of the unique features (3) that are recorded using only one digital camera (5), the digital camera (5) generating a first digital recording (16) from a first viewing angle (15), then the position of the digital camera (5) being changed, and the digital camera (5) generating at least one second digital recording (16') from at least one second viewing angle (15').

2. Method according to claim 1, **characterised in that** the unique features (3) are formed by random, optically detectable three-dimensional structures or randomly arranged materials having different optical properties depending on the viewing angle (15).

3. Method according to either claim 1 or claim 2, **characterised in that** the unique features (3) are derived from the object (1) or its packaging (2).

4. Method according to any of claims 1 to 3, **characterised in that** the authenticity of the object (1) is determined by optically detecting the unique features (3) or at least part of the object (1) or its packaging (2) using at least one digital camera (5) in each case from at least two different viewing angles and by optically detecting the signature (8) of the digitised features (6) and processing the optical recordings.

5. Method according to any of claims 1 to 4, **characterised in that** the unique features (3) and/or the signature (8) of the digitised features (6) are directly applied to, for example printed onto, the surface of the object (1) or its packaging (2), the unique features (3) which are applied directly to the surface of the object (1) or its packaging (2) and/or the signature (8) of the digitised features (3) preferably being visually and/or functionally damaged by means of manipulation by a predetermined breaking point or the like.

6. Method according to any of claims 1 to 4, **characterised in that** the unique features (3) and/or the signature (8) of the digitised features (6) are applied to, in particular printed onto, at least one carrier (4), and the at least one carrier (4) is applied to, in particular glued to, the surface of the object (1) or its packaging (2), at least one carrier (4) preferably being visually and/or functionally damaged by means of manipulation, in particular detachment, by a predetermined breaking point or the like.

7. Method according to any of claims 1 to 6, **characterised in that** the unique features (3) have an at least partly random surface geometry, colouring or a combination thereof and/or have different light reflection properties as optical properties depending on the viewing angle (15).

8. Method according to any of claims 1 to 7, **characterised in that** the unique features (3) which are applied to the object (1) or its packaging (2) and the signature (8) of the digitised features (6) have at least one additional security feature, such as raised or recessed surfaces, watermarks, holograms or reflective surfaces, etc.

9. Method according to any of claims 1 to 8, **characterised in that** pieces of digitised information (10) of the object (1) are added to the digitised features (6) before the signing.

10. Method according to any of claims 1 to 9, **characterised in that** pieces of digitised information (10) of the object (1) and/or the digitised features (6) are added to the signature (8) of the digitised features (6).

11. Method according to any of claims 1 to 10, **characterised in that** the signature (8) of the digitised features (6) is in the form of a one-dimensional or two-dimensional barcode and/or is stored in an RFID (Radio Frequency Identification) element.

12. Method according to any of claims 1 to 11, **characterised in that** the unique features (3) and/or the signature (8) are human-readable and are read out by the user and are entered into a device suitable for processing.

13. Method according to any of claims 1 to 12, **characterised in that** the signature (8) of the digitised features (6) and/or pieces of digitised information (10) of the object (1) are stored in a central database (19).

14. Method according to any of claims 1 to 13, **characterised in that**, when verifying the authenticity of the object (1), data for uniquely identifying the object (1) and data (18) for localising said object are detected and are stored in a central database (19).

## Revendications

1. Procédé pour la reconnaissance sans équivoque d'un objet (1), dans lequel des caractéristiques uniques (3) sont numérisées et signées avec une clé privée (9), et les caractéristiques uniques (3) sont en outre elles-mêmes, pour la signature (8) des caractéristiques numérisées (6), disposées sur l'objet (1) ou un emballage (2) de l'objet (1) ou constituées d'au moins une partie de l'objet (1) ou de son emballage (2), et l'authenticité de l'objet (1) est constatée par comparaison des caractéristiques uniques (3) avec la signature (8) des caractéristiques numérisées (6), décryptée avec une clé publique (11), disposée sur l'objet (1) ou son emballage (2), dans lequel les caractéristiques uniques (3) sont constituées de structures tridimensionnelles ou de matériaux avec des propriétés optiques différentes en fonction de l'angle d'observation (15), pouvant être détectés optiquement à l'aide d'un téléphone mobile, d'un PC tablette ou d'un ordinateur portable équipé d'une caméra, et en ce que les caractéristiques numérisées (6) sont générées à l'aide d'un algorithme (17), dans lequel l'algorithme (17) est appliqué à au moins deux prises de vues numériques (16, 16'), capturées avec au moins une caméra numérique (5), des caractéristiques uniques (3) à des angles d'observation (15, 15') différentes, dans lequel les caractéristiques uniques (3) sont constituées d'au moins une partie d'un film contenant les structures tridimensionnelles ou les matériaux, dans lequel l'au moins une partie du film est choisie de manière arbitraire, **caractérisé en ce que** l'algorithme (17) est conçu pour générer les caractéristiques numérisées (6) à partir d'au moins deux prises de vues numériques (16, 16') des caractéristiques uniques (3), capturées avec une seule caméra numérique (5), dans lequel la caméra numérique (5) génère, à un premier angle d'observation (15), une première prise de vue numérique (16) puis la position de la caméra numérique (5) est modifiée, et la caméra numérique (5) génère, à au moins un deuxième angle d'observation (15'), au moins une deuxième prise de vue (16').

2. Procédé selon la revendication 1, **caractérisé en ce que** les caractéristiques uniques (3) sont constituées de structures tridimensionnelles aléatoires pouvant être détectées de manière optique ou des matériaux disposés de manière aléatoire avec des propriétés optiques différentes en fonction de l'angle d'observation (15).

3. Procédé selon l'une des revendications 1 ou 2, **caractérisé en ce que** les caractéristiques uniques (3) sont dérivées de l'objet (1) ou de son emballage (2).

4. Procédé selon l'une des revendications 1 à 3, **caractérisé en ce que** l'authenticité de l'objet (1) est constatée à l'aide de la détection optique des caractéristiques uniques (3) ou d'au moins une partie de l'objet (1) ou de son emballage (2) avec au moins une caméra numérique (5) à partir d'au moins deux angles d'observation différents et par la détection de la signature (8) des caractéristiques numérisées (6) et le traitement des prises de vue optiques.

5. Procédé selon l'une des revendications 1 à 4, **caractérisé en ce que** les caractéristiques uniques (3) et resp. ou la signature (8) des caractéristiques numérisées (6) sont appliquées, par exemple imprimées, directement sur la surface de l'objet (1) ou de son emballage (2), dans lequel les caractéristiques uniques (3) et resp. la signature (8) des caractéristiques numérisées (3), appliquées directement sur la surface de l'objet (1) ou de son emballage (2), sont endommagées de manière visuelle et resp. ou fonctionnelle de préférence par la manipulation à l'aide d'un point de rupture prédéterminé.

6. Procédé selon l'une des revendications 1 à 4, **caractérisé en ce que** les caractéristiques uniques (3) et resp. ou la signature (8) des caractéristiques numérisées (6) sont appliquées, par exemple imprimées, directement sur au moins un support (4) et l'au moins un support (4) est appliqué, plus particulièrement collé, sur la surface de l'objet (1) ou de son emballage (2), où de préférence l'au moins un support (4) est endommagé, de manière visuelle et resp. ou fonctionnelle de préférence par la manipulation, plus particulièrement le détachement, à l'aide d'un point de rupture prédéterminé.

7. Procédé selon l'une des revendications 1 à 6, **caractérisé en ce que** les caractéristiques uniques (3) présentent une géométrie de surface, une coloration, au moins aléatoires, ou une combinaison de celles-ci, et/ou présentent, en tant que propriétés optiques, des propriétés de réflexion lumineuse différentes en fonction de l'angle d'observation (15).

8. Procédé selon l'une des revendications 1 à 7, **caractérisé en ce que** les caractéristiques uniques (3) appliquées sur l'objet (1) ou son emballage (2) et la signature (8) des caractéristiques numérisées (6) comprennent au moins une caractéristique de sécurité supplémentaire, par exemple des surfaces rehaussées ou approfondies, des filigranes, des hologrammes ou des surfaces réfléchissantes et.

9. Procédé selon l'une des revendications 1 à 8, **caractérisé en ce que**, aux caractéristiques numérisées (6), avant la signature, sont ajoutées des informations numérisées (10) de l'objet (1).

10. Procédé selon l'une des revendications 1 à 9, **caractérisé en ce que**, à la signature (8) des caractéristiques numérisées (6) sont ajoutées des informations numérisées (10) de l'objet (1) et resp. ou les caractéristiques numérisées (6).

11. Procédé selon l'une des revendications 1 à 10, **caractérisé en ce que** la signature (8) des caractéristiques numérisées (6) est représentée sous la forme d'un code-barre monodimensionnel ou bidimensionnel et/ou enregistrée dans un élément RFID (Radio Frequency Identification).

12. Procédé selon l'une des revendications 1 à 11, **caractérisé en ce que** les caractéristiques uniques (3) et resp. ou la signature (8) sont lisibles par un humain et sont lues par l'utilisateur et entrées dans un appareil conçu pour le traitement.

13. Procédé selon l'une des revendications 1 à 12, **caractérisé en ce que** la signature (8) des caractéristiques numérisées (6) et resp. ou les informations numérisées (10) de l'objet (1) sont enregistrées dans une base de données centrale (19).

14. Procédé selon l'une des revendications 1 à 13, **caractérisé en ce que**, lors de la vérification de l'authenticité de l'objet (1), des données concernant l'identification unique de l'objet (1) et des données (18) pour sa localisation sont capturées et enregistrées dans une base de données centrale (19).
